Europäisches Patentamt

European Patent Office

Office européen des brevets

(19)

(11) Veröffentlichungsnummer: **0 192 085**
**B1**

(12) **EUROPÄISCHE PATENTSCHRIFT** ·

(45) Veröffentlichungstag der Patentschrift: **02.05.90**

(21) Anmeldenummer: **86101080.9**

(22) Anmeldetag: **28.01.86**

(51) Int. Cl.⁵: **A 01 C 17/00**

(54) Zweischeibendüngerstreuer.

(30) Priorität: **16.02.85 DE 3505382**

(43) Veröffentlichungstag der Anmeldung:
**27.08.86 Patentblatt 86/35**

(45) Bekanntmachung des Hinweises auf die
Patenterteilung:
**02.05.90 Patentblatt 90/18**

(84) Benannte Vertragsstaaten:
**AT CH DE FR GB IT LI NL**

(56) Entgegenhaltungen:
**EP-A-0 017 128**
**EP-A-0 081 257**
**DE-A-2 065 932**
**DE-A-2 407 085**
**DE-U-1 883 214**
**US-A-3 966 124**
**US-A-4 300 725**

(73) Patentinhaber: **ACCORD Landmaschinen
Heinrich Weiste & Co. GmbH
Coesterweg 42
D-4770 Soest (DE)**

(72) Erfinder: **Wiegelmann, Hubert, Ing. (grad.)
Rochusstrasse 13
D-4796 Salzkotten-Tudorf (DE)**

(74) Vertreter: **Habbel, Hans-Georg, Dipl.-Ing.
Postfach 3429 Am Kanonengraben 11
D-4400 Münster (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung bezieht sich auf einen Zweischeibendüngerstreuer gemäß dem Oberbegriff des Anspruches 1.

Allgemein besteht bei Zweischeibendüngerstreuern das Problem, sowohl außen als auch in der Mitte hinter dem Schlepper eine optimale Überlappung des Streubildes zu erreichen. Das Streubild wird gleichmäßiger, wenn man mit größerer Überlappung, d.h. höherer Umfangsgeschwindigkeit, fährt. Als Nachteil stellt sich dann aber eine zu starke Überlappung in der Mitte hinter dem Schlepper heraus. Man kann dann mit dem Streuer nicht mehr halbseitig ohne Zusatzteile streuen, weil eine Schleuderscheibe zu weit in die andere Hälfte hineinstreut. Durch Reduzierung der Umfangsgeschwindigkeit werden die Flanken des Streubildes außen sehr steil und in der Mitte ergibt sich neben dem Schlepper eine Unterdüngung.

Zweischeibendüngerstreuer sind beispielsweise aus der FR—A—23 82 172 bekannt. Diese Zweischeibendüngerstreuer gehören zu den sogenannten Schleuderstreuern, die heute üblicherweise zwei Scheiben aufweisen, die mit einer Umfangsgeschwindigkeit von 12 bis 16 m/sec. angetrieben werden und vier Mitnehmer tragen. Fast ausnahmslos handelt es sich dabei um Planscheiben, die den Dünger in der horizontalen Ebene abwerfen. Obgleich im Gegensatz zu den bodenangetriebenen Schleuderdüngerstreuern bei den modernen Düngerstreuern über den Zapfwellenantrieb eine konstante Umfangsgeschwindigkeit der Schleuderscheiben erreichbar ist, treten aber immer wieder Unregelmäßigkeiten im Streubild durch unterschiedliche Düngersorten oder Düngerbeschaffenheiten auf. Dies führt zu Überstreuungen oder Fehlstellen, die einen unregelmäßigen Pflanzenaufgang bewirken.

In der DE—A—24 07 085 wird eine Reihenstreuvorrichtung für Schleuderdünger beschrieben, bei welcher der von den Schleuderscheiben abgeschleuderte Dünger in einem Gehäuse aufgefangen wird und auf zwei oder mehr schlauchförmige Leitungen verteilt wird. Es handelt sich also nicht um einen sogenannten Schleuderstreuer, sondern um eine Einrichtung zum Düngen von Reihenkulturen. Es wird angestrebt, den von den Schleuderscheiben abgegebenen Dünger in zwei oder mehr Abgabeebenen aufzuteilen, so daß zwei oder mehrere Pflanzenreihen gedüngt werden können. Es wird also kein Streubild angestrebt, das bei Schleuderstreuern möglichst gleichmäßig ausgebildet sein soll, sondern es wird eine gezielte Zuführung durch Schläuche zu den Reihenkulturen angestrebt.

Aus der gattungsbildenden EP—A—0017128 ist es bekannt, zur gleichmäßigen Verteilung der Düngemittel, den senkrechten Abwurfwinkel dadurch zu verstellen, daß ein äußeres Teil der Mitnehmer vertikal neigbar ausgebildet ist, so daß der Düngerstrom in vertikaler Richtung abgelenkt wird. Die Ablenkung des Granulatstromes nach oben, aus der Ebene der horizontalen Führungsfläche heraus, bewirkt aber hauptsächlich eine größere Wurfweite, was aber auch zu einer Verschiebung der Überlappungszonen führt und damit das Streubild verschlechtert.

Der Erfindung liegt die Aufgabe zugrunde, den gattungsbildenden Zweischeibendüngerstreuer dahingehend zu verbessern, daß einmal eine Vergleichmäßigung der äußeren Bereiche der Streubreite im Sinne einer Abflachung der Verteilungskurve erfolgt und daß zum andern beim Streuen von unterschiedlichen Düngersorten in der Überlappungszone der beiden Streuscheiben, d.h. im Bereich der Fahrbahnmitte, die Überlappung gering gehalten werden kann, wodurch einseitiges Streuen an den Feldgrenzen ohne teure Zusatzeinrichtungen möglich ist.

Diese der Erfindung zugrundeliegende Aufgabe wird durch die Lehre des Anspruches 1 gelöst.

Vorteilhafte Ausgestaltungen sind in den Unteransprüchen erläutert.

Durch die erfindungsgemäße Anordnung wird in überraschender Weise erreicht, daß dadurch, daß die Ablenkmittel so ausgebildet sind, daß sie den Düngerstrom ganz oder teilweise in Flugbahnen aufteilen die in der Scheibenebene liegen, d.h. also kein zusätzliches Anheben der Flugbahnen bewirken, daß über die gesamte Streubreite ein gleichmäßiges Streubild erzielt wird, d.h. keine Überdüngung und keine Fehlstellen auftreten und ein einseitiges Streuen an den Feldgrenzen ohne teure Zusatzeinrichtungen möglich ist.

Ein Ausführungsbeispiel der Erfindung wird nachfolgend anhand der Zeichnung erläutert. Die Zeichnung zeigt dabei in

Fig. 1 schaubildlich eine Schleuderscheibe mit vier Mitnehmern, in

Fig. 2 einen Mitnehmer mit einer schlitzförmigen Durchtrittsöffnung und in

Fig. 3 einen Mitnehmer mit einer Bremsschaufel an seinem Abgabeende.

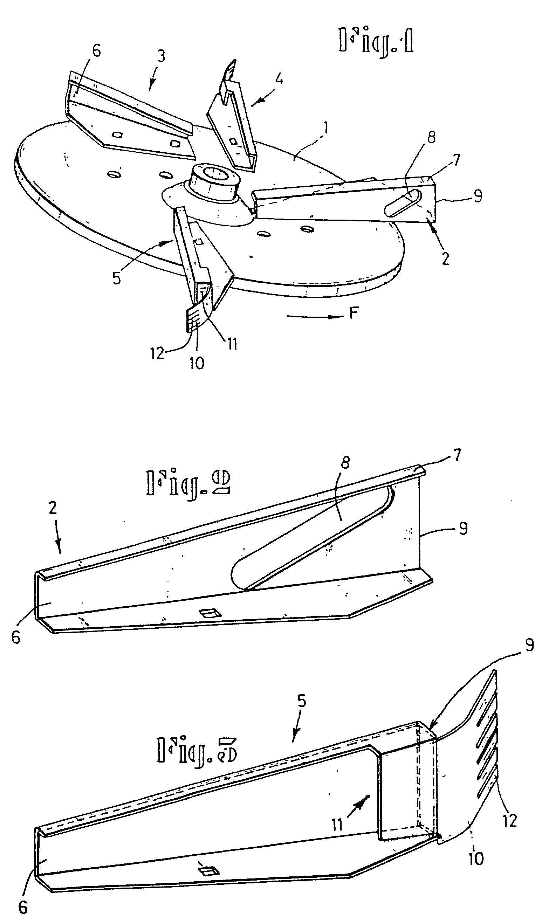

In Fig. 1 ist mit 1 eine Schleuderscheibe bezeichnet, die über entsprechende in der Zeichnung nicht dargestellte Getriebeeinrichtungen in eine Umlaufbewegung entsprechend dem Pfeil *F* angetrieben wird.

An der Oberseite der Schleuderscheibe 1 sind Mitnehmer 2, 3, 4 und 5 angeordnet, die unterschiedlich ausgebildet sind, wobei alle Mitnehmer gemeinsam haben, daß sie sich radial vom Zentrum der Scheibe zur Umfangsfläche der Schleuderscheibe 1 erstrecken und dabei eine vertikale Führungsfläche 6 besitzen, die an ihrer oberen Endkante eine sich rechtwinklig zur Ebene der Führungsfläche 6 erstreckende Führungsfläche 7 trägt, die zur Innenseite der vertikalen Führungsfläche 6 hingerichtet diese übergreift, wobei mit Innenseite die Seite bezeichnet ist, an der bei Umlauf der Schleuderscheibe 1 sich der aus einem nicht dargestellten Vorratsbehälter zugeführte Dünger anlegt. Die Mitnehmer 2, 3, 4 und 5 sind in an sich bekannter Weise auf der Oberseite der Schleuderscheibe befestigt.

Der Mitnehmer 2, der in Fig. 2 in größerem Meßstab dargestellt ist, weist in seiner vertikalen Führungsfläche 6 eine Durchtrittsöffnung 8 auf, die schlitzförmig ausgebildet ist, d.h. als Langloch gestaltet ist und die sich in radialer Richtung der Schleuderscheibe gesehen etwa vom Boden der vertikalen Führungsfläche 6 nach oben zur horizontalen Führungsfläche 7 hin erstreckt und vor dem Abgabeende 9, d.h. der Abstreukante der vertikalen Führungsfläche 6 endet.

Durch diese Durchtrittsöffnung 8 kann bei der Bewegung des Düngers, d.h. der Führung des Düngers vom Zentrum zum Abgabeende 9 hin ein Teil des Düngers austreten, wodurch eine Vergleichmäßigung der äußeren Bereiche der Streubreite im Sinne einer Abflachung der Verteilungskurve erfolgt.

Bei dem in Fig. 3 in größerem Maßstab dargestellten Mitnehmer 5 oder 4 ist am Abgabeende 9 eine Bremsschaufel 10 vorgesehen, die entgegen der Umlaufrichtung *F* der Schleuderscheibe 1 nach hinten geneigt ist. Zwischen dem mitnehmerseitigen Ende der Bremsschaufel 10 und der Innenseite der vertikalen Führungsfläche 6 besteht eine Düngerdurchtrittsöffnung 11, so daß der von der vertikalen Führungsfläche 6 geführte Dünger an die Innenseite der Bremsschaufel 10 gelangt. Die Bremsschaufel 10 kann dabei wie aus Fig. 3 erkennbar, an ihrem freien Ende mit Schlitzen 12 ausgerüstet sein. Durch die Bremsschaufeln wird erreicht, daß beim Streuen von unterschiedlichen Düngersorten in der Überlappungszone der beiden Streuscheiben, d.h. im Bereich der Fahrbahnmitte, die Überlappung gering gehalten werden kann, wodurch einseitiges Streuen an den Feldgrenzen ohne teure Zusatzeinrichtungen möglich ist.

Versuche haben ergeben, daß die besten Ergebnisse hinsichtlich der Lösung der der Erfindung zugrundeliegenden Aufgabe dadurch erreicht werden, wenn die Schleuderscheibe 1 mit einem Mitnehmer 3 ausgerüstet ist, der in üblicher Weise, d.h. wie zum Stand der Technik gehörend, ausgebildet ist. Dieser Mitnehmer 3 liegt auf der Streuscheibe 1 dem Mitnehmer 2 gegenüber, der mit einer Durchtrittsöffnung 8 ausgerüstet ist. Zwischen diesen beiden Mitnehmern sind die Mitnehmer 4 und 5 angeordnet, die jeweils mit einer Bremsschaufel 10 ausgerüstet sind. Hierbei ergab sich ein vollkommen gleichmäßiges Streubild, und zwar über die gesamte Streubreite gesehen, insbesondere bei unterschiedlichen Düngersorten.

Durch Betrieb nur einer Schleuderscheibe ist bei Einsatz der erfindungsgemäßen Mitnehmer gleichzeitig eine saubere Randsteuerung zu erreichen, so daß ein Streuen über beispielsweise die Feldbegrenzung nicht mehr befürchtet werden muß.

**Patentansprüche**

1. Zweischeibendüngerstreuer mit zwei in Umdrehung versetzten Schleuderscheiben (1), die an ihrer Oberseite mit Mitnehmern (2, 3, 4, 5) ausgerüstet sind, die je eine radial vom Zentrum der Schleuderscheibe zum Umfang der Schleuderscheibe gerichtete, vertikale Führungsfläche (6) und eine sich an der oberen Kante der vertikalen Führungsfläche (6) anschließende, in Umdrehungsrichtung der Schleuderscheibe (1) ausgerichtete, zur vertikalen Führungsfläche (6) senkrecht stehende Führungsfläche (7) aufweisen und in Strömungsrichtung des Granulatstromes gesehen im Endbereich der Mitnehmer (2, 3, 4, 5) Ablenkmittel für die Flugbahn des Granulatstromes vorgesehen sind, wobei die Mitnehmer (2, 3, 4, 5) einer Schleuderscheibe (1) unterschiedlich ausgebildete Ablenkmittel aufweisen, dadurch gekennzeichnet, daß die Ablenkmittel den von den vertikalen Führungsflächen (6) geführten Granulatstrom in Flugbahnen dadurch aufteilen, daß in der vertikalen Führungsfläche (6) eines Mitnehmers (2) eine Durchtrittsöffnung (8) vorgesehen ist, und dadurch umlenken, daß am Abgabeende (9) wenigstens eines anderen Mitnehmers (4, 5) eine vertikale Bremsschaufel (10) angeordnet ist, die den Granulatstrom parallel zur Scheibenebene beeinflußt.

2. Vorrichtung nach Anspruch 1, dadurch gekennzeichnet, daß die Durchtrittsöffnung (8) in der Nähe des Abgabeendes (9) der vertikalen Führungsfläche (6) des Mitnehmers (2) vorgesehen ist.

3. Vorrichtung nach Anspruch 1 oder 2, dadurch gekennzeichnet, daß die Durchtrittsöffnung (8) schlitzförmig ausgebildet ist.

4. Vorrichtung nach einem oder mehreren der vorhergehenden Ansprüche 1 bis 3, dadurch gekennzeichnet, daß die schlitzförmige Durchtrittsöffnung (8) sich von der schleuderscheibenseitigen Bodenkante des Mitnehmers (2) schräg nach oben und außen zum Abgabeende (9) hin erstreckt.

5. Vorrichtung nach Anspruch 1, dadurch gekennzeichnet, daß die Bremsschaufel (10) sich in Verlängerung der vertikalen Führungsfläche (6) erstreckt, aber entgegen der Umdrehungsrichtung der Schleuderscheibe (1) nach hinten gewölbt ist und zwischen ihrer mit dem Dünger in Kontakt kommenden Innenseite und der mit dem Dünger in Kontakt kommenden Seite der Führungsfläche (6) eine Düngerdurchtrittsöffnung (11) schafft.

6. Vorrichtung nach Anspruch 1 und 5, dadurch gekennzeichnet, daß in dem freien Ende der Bremsschaufel (10) sich in Längsachse der Bremsschaufel (10) erstreckende Schlitze (12) angeordnet sind.

7. Vorrichtung nach einem oder mehreren der vorhergehenden Ansprüche, dadurch gekennzeichnet, daß auf einer Schleuderscheibe (1) vier Mitnehmer vorgesehen sind, von denen einer (2) mit einer schlitzförmigen Durchtrittsöffnung (8) ausgerüstet ist, zwei (4, 5) je eine Bremsschaufel (10) aufweisen und einer (3) als Normalschaufel ausgebildet ist.

**Revendications**

1. Distributeur d'engrais à deux disques, comportant deux disques centrifuges (1) déplacés en rotation, qui sont munis, sur leur face supérieure, d'entraîneurs (2, 3, 4, 5), qui présentent chacun une surface de guidage verticale (6), dirigée radialement du centre du disque centrifuge à la périphérie du disque centrifuge, et une surface de guidage (7) se raccordant au bord supérieur de la surface de guidage verticale (6), orientée dans le sens de rotation du disque centrifuge (1), et s'étendant perpendiculairement à la surface de guidage verticale (6), et, vu dans le sens d'écoulement du courant de granulat, dans la zone d'extrémité des entraîneurs (2, 3, 4, 5), sont prévus des moyens de déviation de la trajectoire du courant de granulat, les entraîneurs (2, 3, 4, 5) d'un disque centrifuge (1) présentant des moyens de déviation réalisés différemment, caractérisé par le fait que les moyens de déviation partagent le courant de granulat guidé par les surfaces de guidage verticales (6) en trajectoires, par le fait que, dans la surface de guidage verticale (6) d'un entraîneur (2), est prévue une ouverture traversante (8), et le changent de direction par le fait que, sur l'extrémité de distribution (9) d'au moins un autre entraîneur (4, 5), est disposée une ailette de freinage verticale (10), qui influe sur le courant de granulat parallèlement au plan du disque.

2. Dispositif selon la revendication 1, caractérisé par le fait que l'ouverture traversante (8) est prévue au voisinage de l'extrémité de distribution (9) de la surface de guidage verticale (6) de l'entraîneur (2).

3. Dispositif selon l'une des revendications 1 ou 2, caractérisé par le fait que l'ouverture traversante (8) est réalisée sous la forme d'une fente.

4. Dispositif selon l'une ou plusieurs des revendications précédentes 1 à 3, caractérisé par le fait que l'ouverture traversante (8) en forme de fente s'étend du bord de base côté disque centrifuge de l'entraîneur (2) en oblique vers le haut et vers l'extérieur, en direction de l'extrémité de distribution (9).

5. Dispositif selon la revendication 1, caractérisé par le fait que l'ailette de freinage (10) s'étend dans le prolongement de la surface de guidage verticale (6), mais est cintrée vers l'arrière à l'opposé du sens de rotation du disque centrifuge (1), et crée une ouverture traversante (11) pour l'engrais entre son côté interne venant en contact avec l'engrais et le côté de la surface de guidage (6) venant en contact avec l'engrais.

6. Dispositif selon les revendications 1 et 5, caractérisé par le fait que, dans l'extrémité libre de l'ailette de freinage (10), sont disposées des fentes (12) s'étendant selon l'axe longitudinal de l'ailette de freinage (10).

7. Dispositif selon l'une ou plusieurs des revendications précédentes, caractérisé par le fait que, sur un disque centrifuge (1), sont prévus quatre entraîneurs dont l'un (2) est muni d'une ouverture traversante (8) en forme de fente, deux (4, 5) présentent chacun une ailette de freinage (10) et l'un (3) est réalisé sous la forme d'une ailette normale.

## Claims

1. Two-disc fertiliser spreader having two bladed discs (1) set in rotary motion, said discs being equipped on their upper face with drivers (2, 3, 4, 5), each of which has a vertical guiding surface (6) directed radially from the centre of the bladed disc to the circumference of the bladed disc and a guiding surface (7) which is perpendicular to the vertical guiding surface (6), follows on from the top edge of the vertical guiding surface (6), and is orientated in the direction of rotation of the bladed disc (1), and viewed in the direction of flow of the stream of granules there are provided in the extreme region of the drivers (2, 3, 4, 5) deflecting means for the flight path of the stream of granules, the drivers (2, 3, 4, 5) of one bladed disc (1) having differently constructed deflecting means, characterised in that the deflecting means sub-divide the stream of granules passing from the vertical guiding surfaces (6) into flight paths by virtue of a passage (8) provided in the vertical guiding surface (6) of one driver (2), and deflect said stream of granules by virtue of a vertical braking blade (10) disposed at the delivery end (9) of at least one other driver (4, 5), said braking blade (10) affecting the stream of granules parallel to the disc plane.

2. Apparatus according to claim 1, characterised in that the passage (8) is provided near the delivery end (9) of the vertical guiding surface (6) of the driver (2).

3. Apparatus according to claim 1 or 2, characterised in that the passage (8) is slot-shaped.

4. Apparatus according to one or more of preceding claims 1 to 3, characterised in that the slot-shaped passage (8) extends, from the bottom edge of the driver (2) on the side nearest the bladed discs, obliquely upwards and outwards to the delivery end (9).

5. Apparatus according to claim 1, characterised in that the braking blade (10) extends in continuation of the vertical guiding surface (6), but is rearwardly cambered counter to the direction of rotation of the bladed disc (1) and creates a fertiliser passage (11) between its inner face which comes into contact with the fertiliser and the face of the guide surface (6) that comes into contact with the fertiliser.

6. Apparatus according to claims 1 and 5, characterised in that in the free end of the braking blade (10) there are disposed slots (12) which extend in the longitudinal axis of the braking blade (10).

7. Apparatus according to one or more of the preceding claims, characterised in that on one bladed disc (1) there are disposed four drivers, one of which (2) is equipped with a slot-shaped passage (8), two (4, 5) each have a braking blade (10) and one (3) is a standard blade.

Fig. 1

Fig. 2

Fig. 3